# EUROPÄISCHE PATENTSCHRIFT

(11) **EP 0 639 418 B1**
(45) Veröffentlichungstag und Bekanntmachung des Hinweises auf die Patenterteilung: **04.02.1998**
(21) Anmeldenummer: 94110162.8
(22) Anmeldetag: 30.06.1994
(51) Int. Cl.: B23C 5/10, B23C 5/22

(54) **Rundlaufendes Schneidwerkzeug mit Wendeplattenbestückung, insbesondere zur Metallbearbeitung**
Rotating cutting tool with inserts, in particular for metalworking
Outils de coupe rotatifs avec plaquettes de coupe, spécialement pour le travail du métal

(30) Priorität: 03.08.1993 DE 4325999
(43) Veröffentlichungstag der Anmeldung: 22.02.1995
(73) Patentinhaber: WALTER AG, D-72072 Tübingen (DE)
(72) Erfinder: Deiss, Siegfried, D-72810 Gomaringen (DE); Schlotterer, Willy, D-72147 Nehren (DE)
(74) Vertreter: Rüger, Rudolf, Dr.-Ing.

(56) Entgegenhaltungen:
- DE-A- 3 314 049
- GB-A- 1 040 067
- GB-A- 2 098 105
- US-A- 4 182 587

## Beschreibung

Die Erfindung betrifft ein rundlaufendes Schneidwerkzeug mit Wendeplattenbestückung, insbesondere zur Metallbearbeitung, mit einem-Werkzeugkörper, der zumindest einen zur Aufnahme einer Wendeschneidplatte eingerichteten Plattensitz aufweist, in den die auf einer Auflagefläche aufliegende Wendeschneidplatte in radialer und axialer Richtung maßgenau seitlich abgestützt ist, wobei die Wendeschneidplatte als Lochplatte mit einer angesenkten durchgehenden Bohrung ausgebildet und mittels einer zugeordneten in eine entsprechende Gewindebohrung des Werkzeugkörpers oder eines mit diesem verbundenen Teiles eingeschraubten, einen Spannkopf aufweisenden Spannschraube in dem Plattensitz lösbar gespannt ist; siehe z.B. DE-A 2906 148.

Bei wendeplattenbestückten Fräs- und Bohrwerkzeugen müssen die Wendeschneidplatten zur Erzielung einer einwandfreien Funktion des Werkzeuges in den zugehörigen Plattensitzen am Werkzeugkörper genau lagerichtig fixiert sein, so daß sich genau tolerierte Rund- und Planlaufverhältnisse der arbeitenden Schneiden ergeben. Dazu wird häufig, beispielsweise bei Eckfräsern oder bei spiralverzahnten Fräsern der Werkzeugkörper mit sogenannten geschlossenen Plattensitzen ausgebildet, das heißt taschenartigen Ausnehmungen mit einer Wendeschneidplatten-Auflagefläche, die in radialer und axialer Richtung jeweils durch eine maßgenaue Seitenfläche begrenzt ist, welche einen Anschlag für die auf der Auflagefläche aufliegende Wendeschneidplatte bildet.

Um eine satte Anlage der Wendeschneidplatte an diesen beiden Anlageflächen zu gewährleisten ist es bei Verwendung von Lochplatten beispielsweise bekannt (DE-PS 2906 148) einen Spannbolzen zu verwenden, der zwischen dem Spannkopf und dem Gewindeteil einen radial vorstehenden konischen Teil trägt, welcher unter seitlicher elastischer Verformung des Spannbolzens gegen die Innenwand einer konisch nach unten zu sich verjüngenden Ausnehmung des Werkzeugkörpers anliegt. Durch geeignete Wahl von Größe und Richtung des gegenseitigen Versatzes der Achsen der Gewindebohrung im Werkzeugkörper und der Bohrung in der Wendeschneidplatte lassen sich die auf die Anlageflächen zu gerichteten Anpreßkräfte, mit denen die Wendeschneidplatte gegen diese Anlageflächen angedrückt wird, vorherbestimmen.

Solche geschlossenen Plattensitze, wie sie beispielsweise aus der EP-0373 292 zu ersehen sind, sind in der Herstellung verhältnismäßig teuer und aufwendig. Dies gilt insbesondere auch für spiralverzahnte Fräswerkzeuge, bei denen die Wendeschneidplatten längs des Umfangs des Werkzeugkörpers in schraubenförmigen Schneidreihen angeordnet sind (vergl. beispielsweise US-PS 5083 887).

In der Praxis wird deshalb bei Eckfräsern und dergleichen häufig eine Ausbildung des Plattensitzes bevorzugt, bei der der maßgenaue Anschlag für die auf der Auflagefläche aufliegende Wendeschneidplatte durch einen Stift gebildet ist, der entweder im wesentlichen radial oder tangential in ein entsprechendes Loch des Werkzeugkörpers eingesetzt ist und der ggf. eine maßgenau bearbeitete Anlagefläche für die Wendeschneidplatte aufweist.

Insbesondere bei spiralverzahnten wendeplattenbestückten Fräswerkzeugen führt dieser Stift aber gelegentlich zu Problemen beim Spanablauf, weil Späne zwischen dem Stift und der darauffolgenden Wendeschneidplatte der Schneidreihe eingeklemmt werden können. Außerdem können sich bei Wendeschneidplatten mit größerem Eckenradius Schwierigkeiten wegen des definierten axialen Anschlages ergeben, weil der Stift verhältnismäßig weit herausragen muß, um bei diesen größeren Eckenradien eine sichere Anlage zu gewährleisten. Inbesondere bei Stiften, wie sie bei links- und rechtsspiraligen, spiralverzahnten Werkzeugen aus geometrischen Gründen verwendet werden müssen, kann sich schließlich auf Grund der durch die Stiftbohrungen hervorgerufenen Schwächung des Werkzeugkörpers eine unerwünschte Beeinträchtigung der Dauerfestigkeit des Werkzeugkörpers ergeben.

Aufgabe der Erfindung ist es deshalb, ein rundlaufendes Schneidwerkzeug, insbesondere einen Bohrer oder einen Fräser zu schaffen, bei dem den vorgenannten Schwierigkeiten abgeholfen ist und das sich durch eine einwandfreie, maßgenaue Spannung der als Lochplatten ausgebildeten Wendeschneidplatten bei unbehindertem Spannablauf und bei geringem Herstellungs- und Montageaufwand auszeichnet.

Zur Lösung dieser Aufgabe ist das eingangs genannte Schneidwerkzeug dadurch gekennzeichnet, daß die in den Plattensitz eingesetzte Wendeschneidplatte quer zur Lochachse lediglich in einer Richtung an einem werkzeugkörperfesten Anschlag und in der anderen Richtung allein durch die Spannschraube formschlüssig maßgenau abgestützt ist.

Zu diesem Zwecke ist die Spannschraube in einer bevorzugten Ausführungsform als Paßschraube mit einem in eine zu der Gewindebohrung koaxiale Paßbohrung des Werkzeugkörpers oder des mit diesem verbundenen Teiles eng toleriert eingreifenden Paßteil ausgebildet.

Damit ist eine exakte Lagefixierung der Wendeschneidplatte ohne störende Elemente, wie Stifte und dergl. gewährleistet, während gleichzeitig eine einfache, kostengünstige Fertigungsmöglichkeit gegeben ist. Der erfindungsgemäße Gedanke ist auch für schmale Werkzeuge, beispielsweise Scheibenfräser, T-Nutenfräser und dergl. anwendbar, bei denen u. U. gar kein Platz für einen zusätzlichen Anschlag vorhanden ist.

Um eine einwandfreie, vorgespannte Anlage der Wendeschneidplatte an der von dem körperfesten Anschlag gebildeten Anlageflache zu erzielen, ist zweckmäßigerweise die Achse der Paßbohrung gegenüber der Lochachse der Wendeschneidplatte in Richtung auf den körperfesten Anschlag zu versetzt.

Der Spannkopf der Spannschraube kann an sich beliebig ausgebildet sein, beispielsweise kegelig, ballig, konkav, konvex oder zylindrisch mit Absetzung, während das Paßteil der Paßschraube in der Regel zylindrisch ist. Der Durchmesser des in die Bohrung der Wendeschneidplatte ragenden Teiles der Paßschraube ist durchweg kleiner als der Durchmesser des ihn umgebenden Bereiches der Bohrung der Wendeschneidplatte, so daß im angezogenen Zustand der Spannschraube lediglich der Spannkopf an der Öffnungsbewandung der Lochplatte zumindest im wesentlichen allseitig anliegt.

Beispielsweise bei einem spiralverzahnten, wendeplattenbestückten Fräswerkzeug ist die jeweilige Wendeschneidplatte durchweg lediglich in radialer Richtung an einem werkzeugkörperfesten Anschlag abgestützt, während die Spannschraube die formschlüssige Abstützung in der axialen Richtung und gleichzeitig die Anpressung der Wendeschneidplatte gegen dem werkzeugkörperfesten Anschlag und die Spannung der Werkzeugplatte gegen ihre Auflagefläche in dem Plattensitz übernimmt.

In der Zeichnung sind Ausführungsbeispiele des Gegenstandes der Erfindung dargestellt. Es zeigen:
- Fig. 1: einen linksspiraligen, rechtsschneidenden wendeplattenbestückten Fräser gemäß der Erfindung mit vier Schneidenreihen, in schematischer perspektivischer Darstellung,
- Fig. 2: den Fräser nach Fig. 1 in einer Seitenansicht, teilweise im axialen Schnitt,
- Fig. 3: den Fraser nach Fig. 1 in der Draufsicht auf die Stirnseite,
- Fig. 4: einen Ausschnitt aus dem Fräser nach Fig. 1 unter Veranschaulichung eines Plattensitzes mit eingesetzter Wendeschneidplatte, in einer Seitenansicht und in einem anderen Maßstab,
- Fig. 5: den Plattensitz nach Fig. 4 in der Draufsicht auf die Auflagefläche für die Wendeschneidplatte bei weggelassener Spannschraube
- Fig. 6: die Anordnung nach Fig. 5, geschnitten längs der Linie VI-VI der Fig. 5 in einer Seitenansicht und im Ausschnitt und
- Fig. 7: einen rechtsspiraligen, rechtsschneidenden wendeplattenbestückten Fräser gemäß der Erfindung mit vier Schneidereihen in schematischer perspektivischer Darstellung.

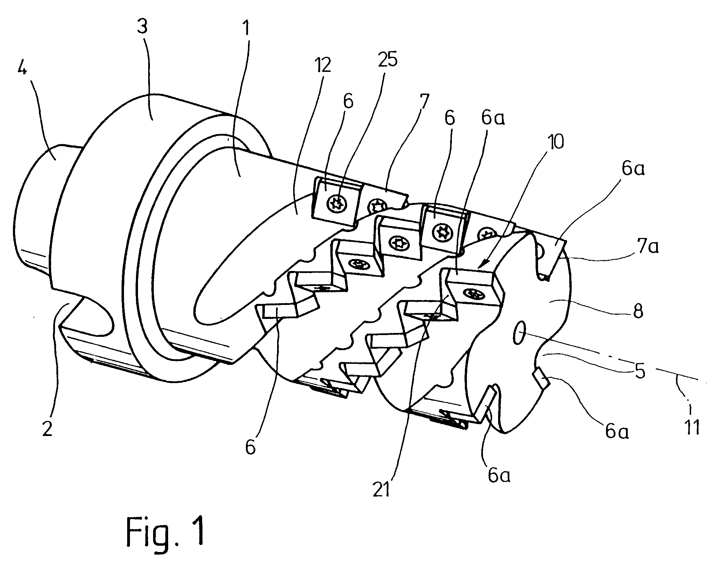

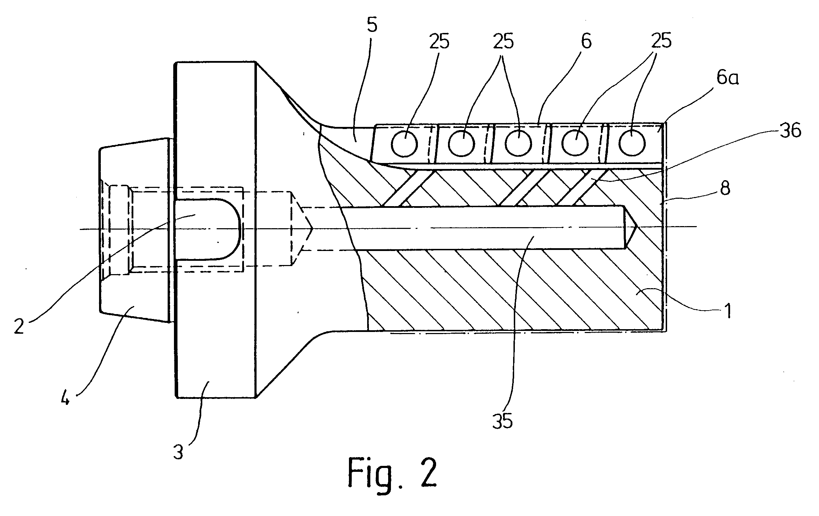

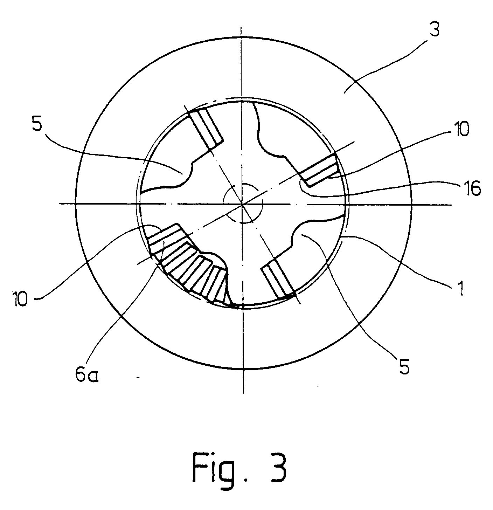

Das in den Fig. 1 - 3 dargestellte rundlaufende Schneidwerkzeug ist ein spiralverzahnter Fräser insbesondere für Zirkular- und Besäumfräsarbeiten an metallischen Werkstücken. Er weist einen im wesentlichen zylindrischen Werkzeugkörper 1 auf, der einen mit einer Mitnehmernut 2 versehenen Ringflansch 3 und daran anschließend einen Kurzkegel 4 zur Verbindung mit der nicht weiter dargestellten Aufnahme trägt. Der aus Stahl hergestellte Werkzeugkörper 1 ist an seinem Umfang mit vier linksspiralig gewundenen Spannuten 5 gleicher Steigung versehen und mit quadratischen oder parallelogrammförmigen Wendeschneidplatten 6 bestückt, durch die vier den Spannuten 5 zugeordnete Schneidenreihen gebildet sind.

Zu diesem Zwecke sind die Wendeschneidplatten 6 derart angeordnet, daß einander benachbarte Wendeschneidplatten 6 jeder Schneidenreihe sich in Achsrichtung überdecken, so daß jede Schneidenreihe eine sogenannte geschlossene Schneidenreihe ist.

Es sind auch Ausführungsformen gebräuchlich, bei denen die Wendeschneidplatten 6 benachbarter Schneidenreihen auf Lücke zueinander stehen, derart, daß immer zwei Schneidenreihen resultierend eine komplette Schneidenreihe bilden.

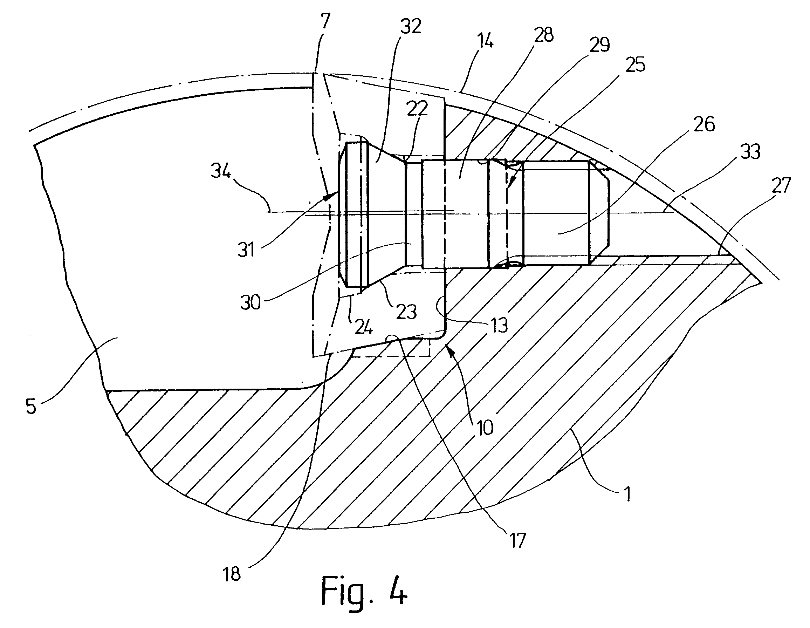

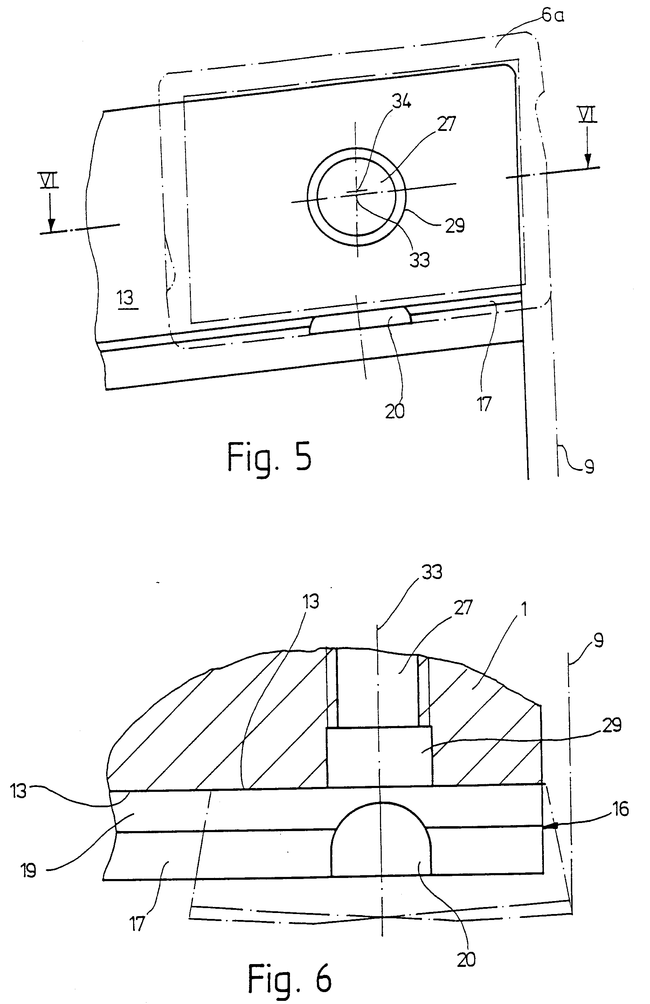

Jede der Schneidenreihen enthält eine eckständige Wendeschneidplatte 6a, die mit einer Stirnschneide 7a über die Stirnfläche 8 des Werkzeugkörpers 1 vorragt, wobei alle Stirnschneiden 7a in einer gemeinsamen Fläche liegen, die in Fig 5, 6 bei 9 strichpunktiert angedeutet ist. Die Haupt- oder Umfangsschneiden 7 der Wendeschneidplatten 6, 6a beschreiben jeweils den gleichen Flugkreis 14 (Fig. 4).

Jede der Wendeschneidplatten 6, 6a ist in einem nuten- oder taschenförmigen Plattensitz 10 aufgenommen, der im Bereich der im wesentlichen radial zur Drehachse 11 des Werkzeugkörpers 1 gerichteten Wand 12 der zugeordneten Spannut 5 angeordnet ist. Wie insbesondere aus den Figuren 4 - 6 zu entnehmen, weist jeder Plattensitz 10 eine ebene Auflagefläche 13 für eine Wendeschneidplatte 6, 6a auf. Die Auflagefläche 13 ist bezüglich der Drehachse 11 mit einer solchen Ausrichtung im Raum angeordnet, daß die mit ihrer Haupt- oder Umfangsschneide 7 auf dem gleichen Flugkreis 14 laufenden Wendeschneidplatten 6, 6a mit der richtigen Schneidengeometrie, d.h. mit jeweils vorbestimmtem Achs-und Radialwinkel arbeiten.

An die Auflagefläche 13 schließt sich auf der der Drehachse 11 benachbarten Seite eine Seitenwand 16 an, die einen zumindest über die Länge der Wendeschneidplatte 6, 6a sich erstreckenden Anlagenflächenbereich 17 enthält, der als radialer Anschlag für die auf die Auflagefläche 13 aufgesetzte Wendeschneidplatte 6, 6a dient. Der Anlageflächenbereich 17 ist entsprechend der Neigung der Freifläche 18 (Fig. 4) der als Positivplatte ausgebildeten Wendeschneidplatte 6, 6a geneigt, so daß eine präzise lagerichtige Anlage der Wendeschneidplatte gewährleistet ist. Der Anlageflächenbereich 17 erstreckt sich über lediglich einen Teil der Höhe der Seitenwand 16; er grenzt an einen rechtwinklig zu der Auflagefläche 13 stehenden Flächenbereich 19 an, der im Abstand von der Freifläche 18 der eingesetzten Wendeschneidplatte 6, 6a steht und damit sicherstellt, daß die Wendeschneidplatte 6, 6a einwandfrei an dem Anlagenflächenbereich 17 in Anlage gehalten werden kann. Eine in die Seitenwand 16 von oben her eingearbeitete nutförmige Vertiefung 20 (Fig. 5, 6) unterteilt den Anlageflächenbereich 17 in etwa zwei gleich lange Teile, wodurch verhindert wird, daß die gewisse unvermeidbare Herstellungstoleranzen aufweisende Wendeschneidplatte 6, 6a in der Mitte des Anlageflächenbereiches 17 aufreitet, was zu undefinierten Anlageverhältnissen führen würde.

In Achsrichtung, d.h. etwa in Richtung der Drehachse 11 ist die Auflagefläche 13 nicht durch einen formschlüssigen Anschlag für die auf der Auflagefläche aufliegende Wendeschneidplatte 6, 6a begrenzt. Die sich durch die spiralige Anordnung der Wendeschneidplatten 6, 6a jeder Schneidenreihe ergebende nächstfolgende radiale Schulter 21 (Fig. 1) steht im Abstand zu der eingesetzten Wendeschneidplatte 6, 6a und ist nichtmaßgenau gearbeitet; sie hat auf die Spannung der Wendeschneidplatte keinen Einfluß.

Jede der Wendeschneidplatten 6, 6a, die grundsätzlich quadratisch (Fig. 1), rechteckig parallelogrammförmig oder polygonförmig (in den Fig. 5, 6 strichpunktiert angedeutet) gestaltet sein kann, ist als Lochplatte mit einer durchgehenden, im wesentlichen zylindrischen Bohrung 22 ausgebildet, an die sich zu der Plattenoberseite hin ein im Querschnitt leicht konvex gekrümmter konischer Bohrungsteil 23 anschließt, der sich zu einer Ansenkung 24 hin erweitert.

Zur Befestigung dieser Lochplatte in dem jeweiligen Plattensitz 10 dient jeweils eine Paßschraube 25, die in der aus Fig. 4 ersichtlichen Weise mit einem Gewindeteil 26 in eine dem Plattensitz 10 zugeordnete Gewindebohrung 27 des Werkzeugkörpers 1 eingeschraubt ist.

Die Paßschraube 25 weist ein von dem Gewindeteil 26 über eine Gewindeauslaufnut getrenntes, maßgenaues zylindrisches Paßteil 28 auf, das im montierten Zustand eng toleriert in eine zu der Gewindebohrung 27 koaxiale zylindrische Paßbohrung 29 des Werkzeugkörpers 1 eingefügt ist. An das Paßteil 28 schließt sich über einen kurzen zylindrischen Teil 30 kleineren Durchmessers ein Spannkopf 31 an, der eine im wesentlichen kegelförmige Spannfläche 32 trägt, die im montierten Zustand auf der konischen Fläche 23 der Wendeschneidplatte aufliegt, wie dies in Fig. 4 veranschaulicht ist.

Die rechtwinklig zu der Auflagefläche 13 verlaufende Achse 33 der Gewindebohrung 27 und der Paßbohrung 29 ist in Richtung auf den Anlageflächenbereich 17 zu gegen die Lochachse 34 der Wendeschneidplatte 6, 6a etwas versetzt (Fig. 4,5) derart, daß bei festgezogener Paßschraube 25 auf die Wendeschneidplatte 6, 6a eine auf den Anlagenflächenbereich 17 zu gerichtete, quer zu der Lochachse 34 orientierte Anpreßkraft ausgeübt wird, unter deren Wirkung die Wendeschneidplatte unter Vorspannung an den Anlageflächenbereich 17 angedrückt ist.

Beim Spannen der Wendeschneidplatte 6, 6a in dem Plattensitz 10 kommt die Paßschraube 25 mit ihrer Spannfläche 32 ringsum an der Konusfläche 23 der Wendeschneidplatte 6, 6a zur Anlage. Da sie mit ihrem Paßteil 28 eng toleriert in der Paßbohrung 29 des Werkzeugkörpers 1 geführt ist, ist damit die auf der Auflagefläche 13 aufliegende Wendeschneidplatte 6, 6a auch in Achsrichtung genau maßhaltig formschlüssig fixiert, wobei die Abstützung durch die Paßschraube 25 selbst erfolgt. Da der in die Bohrung 22 der Wendeschneidplatte ragende Teil der Paßschraube 25 einen kleineren Durchmesser als die Bohrung aufweist, ist die zum Ausgleich des kleinen Achsversatzes zwischen der Loch- und der Paßbohrungsachse 34 bzw. 33 und zur Erzeugung der auf den Anlagenflächereich 17 zu gerichteten radialen Anpreßkraft erforderliche elastische Verformung der Paßschraube 25 unbehindert.

Der im vorstehenden anhand der Fig. 1 - 6 erläuterte wendeplattenbestückte Fräser ist, wie erwähnt und wie ein Blick auf Figur 1 zeigt, rechtsschneidend und linksspiralig. In gleicher Weise läßt sich der erfindungsgemäße Gedanke aber auch auf Fräswerkzeuge anwenden, die rechtsschneidend und rechtsspiralig sind, wie überhaupt durch die Gestaltung und den Aufbau der jeweiligen wendeplattenbestückten, rundlaufenden Schneidwerkzeuge keine Beschränkung für den Einsatz der Erfindung gegeben ist.

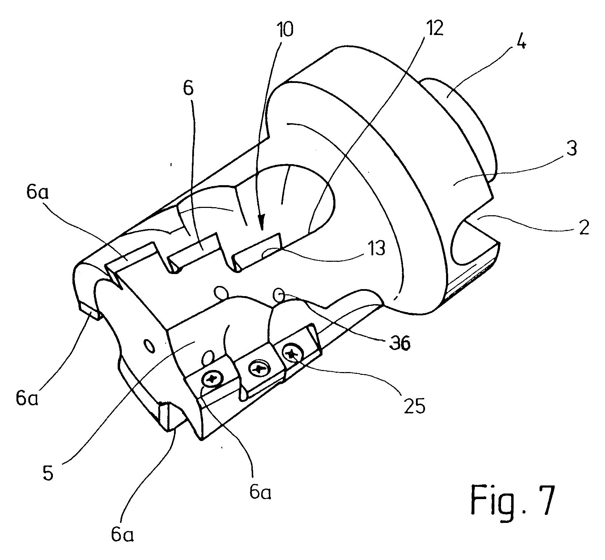

In Figur 7 ist ein solcher rechtsschneidender und rechtsspiraliger Fräser dargestellt, der in seinem grundsätzlichen Aufbau dem linksspiraligen Fräser nach den Figuren 1 - 6 entspricht. Er ist ebenfalls mit vier Schneidenreihen ausgebildet. Gleiche Teile sind deshalb mit gleichen Bezugszeichen versehen und nicht nochmals erläutert.

Die Figur zeigt, daß wegen der rechtsspiraligen Ausbildung die Wendeschneidplatten 6, 6a auf ihrer dem Ringflansch 3 des Werkzeugkörpers 1 zugewandten Seite freistehen, d.h. daß die in Figur 1 mit 21 bezeichnete Schulter in der Verlängerung der jeweiligen Auflagefläche 13 entfällt. Die Zuordnung eines Stiftes oder Bolzens als axialer Anschlag zu den jeweiligen Wendeschneidplatten wie sie beim Stand der Technik gebräuchlich ist, führte ersichtlich hier zu besonderen Schwierigkeiten, weil die Platzverhältnisse beengt sind und der Spanablauf durch einen solchen Stift oder Bolzen behindert würde, abgesehen davon, daß die Gefahr des Verklemmens von Spänen bestünde. Dadurch, daß der axiale Anschlag erfindungsgemäß jeweils durch die Paßschraube 25 gebildet ist, sind in jedem Fall einwandfreie Spanablaufverhältnisse gewährleistet, wie dies die Figur 7 augenfällig erkennen läßt.

Bei den im vorstehenden erläuterten Werkzeugen genügt es in der Regel, die eckständigen Wendeschneidplatten 6a über ihre Paßschrauben 25 in der geschilderten Weise auch in Achsrichtung genau maßhaltig abzustützen, derart, daß die über die Stirnschneiden 7a auf die Wendeschneidplatten 6a einwirkenden Axialkräfte sicher aufgenommen werden. Die anderen, lediglich am Umfang schneidenden Wendeschneidplatten 6 sind keinen größeren solchen Axialkräften ausgesetzt, so daß in der Regel eine axial formschlüssige Abstützung dieser Wendeschneidplatten 6 nicht erforderlich ist. Abhängig von den Einsatzbedingungen, sowie aus Gründen der Verwendung gleicher Spannungen für alle Wendeschneidplatten eines Werkzeuges können aber auch diese Wendeschneidplatten mit Paßschrauben 25 gespannt werden.

Die Gewindebohrungen 27 und die Paßbohrungen 29 sind bei den Ausführungsbeispielen unmittelbar in dem Werkzeugkörper 1 angeordnet. Insbesondere bei Werkzeugen größeren Durchmessers kann es zweckmäßig sein, den Plattensitz 10 jeweils in einem eigenen Teil einer sogenannten Kassette anzuordnen, die dann ihrerseits mit dem Werkzeugkörper verschraubt oder sonstwie an diesem befestigt ist. In solchen Fällen sind dann Gewinde- und Paßbohrung jeweils in der Kassette vorgesehen.

Bei der anhand der Fig. 4, 5 erläuterten Ausführungsform des rundlaufenden Werkzeuges verläuft die Achse 33 der Gewindebohrung 27 und der Paßbohrung 29 rechtwinklig zu der Auflagefläche 13 der jeweiligen Wendeschneidplatte 6, 6a. Grundsätzlich sind auch Ausführungsformen denkbar, bei denen die Achse 33 mit der Auflagefläche 13 einen bestimmten von 90° abweichenden Winkel einschließt, beispielsweise um die Wendeschneidplatte beim Spannen gegen einen radialen Anschlag anzudrücken.
Der Werkzeugkörper 1 ist schließlich mit einem Kühlmittelkanal 35 versehen, von dem aus Stichkanäle 36 zu Kühlmittelauslässen in der Nähe der Wendeschneidplatten 6 führen.

## Patentansprüche

1. Rundlaufendes Schneidwerkzeug mit Wendeplattenbestückung (6,6a), insbesondere zur Metallbearbeitung, mit einem Werkzeugkörper (1), der zumindest einen zur Aufnahme einer Wendeschneidplatte eingerichteten Plattensitz (10) aufweist, in dem die auf einer Auflagefläche (13) aufliegende Wendeschneidplatte in radialer und in axialer Richtung maßgenau seitlich abgestützt ist, wobei die Wendeschneidplatte als Lochplatte mit einer angesenkten, durchgehenden Bohrung (22) ausgebildet und mittels einer zugeordneten, in eine entsprechende Gewindebohrung (27) des Werkzeugkörpers oder eines mit diesem verbundenen Teiles eingeschraubten, einen Spannkopf (31) aufweisenden Spannschraube (25) in dem Plattensitz lösbar gespannt ist, dadurch gekennzeichnet, daß die in den Plattensitz (10) eingesetzte Wendeschneidplatte (6, 6a) quer zur Lochachse (34) der Wendeschneidplatte lediglich in einer Richtung an einem werkzeugkörperfesten Anschlag (17) und in der anderen Richtung allein durch die Spannschraube (25) maßgenau formschlüsslg abgestützt ist.

2. Schneidwerkzeug nach Anspruch 1 dadurch gekennzeich net, daß die Spannschraube als Paßschraube (25) mit einem in eine zu der Gewindebohrung (27) koaxiale Paßbohrung (29) des Werkzeugkörpers (1) oder des mit diesem verbundenen Teiles eng toleriert eingreifenden Paßteil (28) ausgebildet ist.

3. Schneidwerkzeug nach Anspruch 2 dadurch gekennzeichnet, daß die Achse (33) der Paßbohrung (29) gegenüber der Lochachse (34) der Wendeschneidplatte (6,6a) in Richtung auf den werkzeugkörperfesten Anschlag (17) zu versetzt ist.

4. Schneidwerkzeug nach einem der vorhergehenden Ansprüche dadurch gekennzeichnet, daß im angezogenen Zustand der Spannschraube (25) lediglich deren Spannkopf (31) an der Öffnungsberandung (23) der Lochplatte(6,6a) zumindest im wesentlichen allseitig anliegt.

5. Schneidwerkzeug nach einem der vorhergehenden Ansprüche dadurch gekennzeichnet, daß die Wendeschneidplatte (6,6a) lediglich in radialer Richtung an einem werkzeugkörperfesten Anschlag (17) abgestützt ist.

6. Schneidwerkzeug nach einem der vorhergehenden Ansprüche dadurch gekennzeichnet, daß bei der Ausbildung als sowohl am Umfang als auch stirnseitig schneidendes Werkzeug lediglich die stirnseitig schneidenden Wendeschneidplatten (6a) durch ihre jeweilige Spann schraube (25) axial abgestützt sind.

## Claims

1. Rotating cutting tool equipped with inserts (6, 6a), in particular for metalworking, with a tool body (1) having at least one seat (10) which is set up to receive an insert and in which the insert resting on a bearing surface (13) is laterally supported true to size in the radial and axial directions, wherein the insert is constructed as a perforated plate with a countersunk through bore and is releasably gripped in the seat by means of an associated tightening screw (25) which has a gripping head (31) and is screwed into a corresponding threaded bore (27) in the body of the tool or in a part connected to the latter, characterised in that the insert (6, 6a) which is inserted into the seat (10) is supported, in a form-locking manner and true to size, transversely with respect to the axis of the hole (34) in the insert in only one direction on a stop (17) fixed on the body of the tool and in the other direction solely by the tightening screw (25).

2. Cutting tool as claimed in Claim 1, characterised in that the tightening screw is constructed as a fitting screw (25) with a fitting part (28) which engages with a close tolerance in a fitting bore (29) in the body of the tool (1) or of the part connected to the latter, the fitting bore being coaxial with the threaded bore (27).

3. Cutting tool as claimed in Claim 2, characterised in that the axis (33) of the fitting bore (29) is offset relative to the axis (34) of the hole in the insert (6, 6a) in the direction of the stop (17) fixed on the body of the tool.

4. Cutting tool as claimed in one of the preceding claims, characterised in that in the tightened state of the tightening screw (25) only the gripping head (31) thereof rests at least substantially all round on the rim (23) of the opening in the perforated plate (6, 6a).

5. Cutting tool as claimed in one of the preceding claims, characterised in that the insert (6, 6a) is supported only in the radial direction on a stop (17) fixed on the body of the tool.

6. Cutting tool as claimed in one of the preceding claims, characterised in that, in the case where it is constructed as a tool which cuts both on the circumference and on the front face, only the inserts which cut on the front face are axially supported by their respective tightening screws (25).

## Revendications

1. Outil de coupe rotatif à plaquettes de coupe (6, 60) rapportées, destiné notamment à l'usinage de métaux, comportant un corps d'outil (1) qui présente au moins un logement (10) pour une plaquette dans lequel la plaquette de coupe rapportée qui repose sur une surface d'appui (13) est calée avec précision latéralement dans les directions radiale et axiale, la plaquette de coupe rapportée se présentant sous la forme d'une plaquette perforée avec un trou débrouchant (22) pourvu d'un larnage et étant fixée de manière démontable dans le logement de plaquette à l'aide d'une vis de fixation (25) pourvue d'une tête (31), vissée dans un trou fileté (27) adapté du corps d'outil ou d'un élément lié à celui-ci, caractérisé par le fait que la plaquette de coupe rapportée (6, 6a) insérée dans le logement de plaquette (10), transversalement à l'axe du trou (34) de la plaquette de coupe rapportée est calée uniquement dans une directon contre une butée (17) solidaire du corps d'outil et, dans l'autre direction, est calée de manière précise uniquement par complémentarité de formes par la vis de fixation (25).

2. Outil de coupe selon la revendication 1, caractérisé par le fait que la vis de fixation est agencée sous la forme d'une vis ajustée (25) avec une partie ajustée (28) à tolérances étroites qui s'engage dans un trou ajusté (29) du corps d'outil (1) ou de l'élément ajusté (28) lié à celui-ci, coaxial avec le trou fileté (27).

3. Outil de coupe selon la revendication 2, caractérisé par le fait que l'axe (33) du trou ajusté (29) est décalé en direction de la butée (17) solidaire un corps d'outil par rapport à l'axe du trou (34) de la plaquette de coupe rapportée (6, 6a).

4. Outil de coupe selon une des revendications précédentes, caractérisé par le fait que lorsque la vis de fixation (25) est serrée, seule la tête (31) de celle-ci porte au moins sensiblement de tous les côtés sur le bord (23) du trou de la plaquette perforée (6, 6a).

5. Outil de coupe selon une des revendications précédentes, caractérisé par le fait que la plaquette perforée (6, 6a) prend appui uniquement dans la direction radiale sur une butée (17) solidaire du corps d'outil.

6. Outil de coupe selon une des revendications précédentes, caractérisé par le fait que lorsque l'outil coupant est un outil à taille en bout et à taille latérale, seules les plaquettes de coupes (6a) à taille en bout sont calées axialement par leur vis de serrage (25) associée.
